(19) **Europäisches Patentamt / European Patent Office / Office européen des brevets**

(11) **EP 4 769 389 A1**

(12) **EUROPEAN PATENT APPLICATION**

(43) Date of publication:
**01.07.2026 Bulletin 2026/27**

(21) Application number: **24383471.0**

(22) Date of filing: **27.12.2024**

(51) International Patent Classification (IPC):
**G10L 15/26** (2006.01)     **G10L 25/30** (2013.01)
**G10L 25/51** (2013.01)     **G10L 25/57** (2013.01)
**G10L 25/63** (2013.01)     G10L 15/25 (2013.01)
**G10L 25/18** (2013.01)

(52) Cooperative Patent Classification (CPC):
**G10L 25/30; G06F 40/30; G06V 40/40;**
**G10L 15/26; G10L 25/51; G10L 25/57; G10L 25/63;**
G10L 15/25; G10L 25/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Telefonica Innovacion Digital SL**
**28050 Madrid (ES)**

(72) Inventors:
- **Alonso Cebrián, José María**
  **28050 Madrid (ES)**
- **González Pérez, Pablo**
  **28050 Madrid (ES)**
- **Ramírez Vicente, Francisco José**
  **28050 Madrid (ES)**

(74) Representative: **Carlos Hernando, Borja**
**Garrigues IP, S.L.P.**
**Plaza de Colón, 2**
**28046 Madrid (ES)**

(54) **METHOD, SYSTEM AND COMPUTER PROGRAM FOR DEEPFAKE DETECTION IN VIDEO DIGITAL CONTENT**

(57)     A method, system and computer program for deepfake detection in video digital content are provided. Comprises obtaining a video digital content of a user; extracting the audio and video thereof; performing a verbal speech-based detection analysis by transcribing the extracted audio into text and checking whether a speech content is coherent, contextually relevant and/or aligns with an expected topic; performing a voice tonality detection analysis by generating a spectrogram of the extracted audio and identifying irregularities or artifacts characteristics of manipulated or synthesized voice in the spectrogram; performing a facial cue detection analysis by analyzing expression or mouth movements of the user by identifying and dynamically tracking a landmark of the user and verifying whether the analyzed expression or mouth movements temporally and contextually align with speech phonetics; and determining that the obtained video digital content comprises deepfake content based on the performed verbal speech-based detection, voice tonality detection, and facial cue detection analysis.

| Obtain video digital content of a user | 101 |
| Extract video and audio | 102 |
| Verbal speech-based detection analysis | 103 |
| Voice tonality detection analysis | 104 |
| Facial cue detection analysis | 105 |
| Determine whether the video digital content contains deepfake content | 106 |

**Fig. 1**

EP 4 769 389 A1

## Description

## TECHNICAL FIELD

The present invention relates to deepfake detection methods and systems.

## BACKGROUND OF THE INVENTION

Deepfakes are synthetic media where a person's appearance, voice, or behavior is altered or generated using advanced technology. Examples include videos where someone's face is swapped with another person's or audio clips mimicking a voice to say things the person never actually said.

Detection systems use various techniques to analyze content for manipulations. These include identifying visual inconsistencies such as facial feature distortions, lighting mismatches, or artifacts; detecting audio anomalies like unnatural speech patterns or background noise; analyzing temporal inconsistencies in the media; and employing sophisticated AI models to identify manipulations.

The scientific document, "Analysis of Emotion Detection of Images using Sentiment Analysis and Machine Learning Algorithm," explores how deep learning can predict the underlying emotions in an image. It investigates the potential of combining sentiment analysis and machine learning algorithms to interpret emotional cues visually.

The document "Speech Emotion Detection using IoT based Deep Learning for Health Care" proposes a real-time system for emotion detection using speech signals, specifically designed for elderly care in nursing homes. The research presents two key contributions: first, the development of a real-time IoT-based system to record human speech and predict emotions using deep learning; second, the implementation of an advanced classification model that incorporates data normalization and augmentation techniques. The researchers designed an integrated deep learning model named Speech Emotion Detection (SED), leveraging 2D convolutional neural networks (CNN) for accurate emotion classification.

Another document, "A review on sentiment analysis and emotion detection from text," provides insights into sentiment analysis and emotion detection techniques. It examines various levels of sentiment analysis, emotion models, and the processes involved in analyzing sentiments and emotions from textual data. Additionally, the paper discusses the challenges faced in these domains, offering a comprehensive review of existing approaches and their limitations.

## DESCRIPTION OF THE INVENTION

The object of present invention is to provide a multi-faceted deepfake detection solution for video digital content that integrates sentiment analysis, facial recognition, and voice tonality assessments to detect discrepancies between verbal speech, voice tone, and facial expressions.

This object is fulfilled by a method with the characteristics of claim 1 and by a system and computer program with the features of claims 14 and 15.

To that end, a first aspect of the present invention proposes a method for deepfake detection in video digital content, the method comprising performing by one or more processors the following steps: obtaining a video digital content of a user; extracting an audio component and a video component from the video digital content using a signal processing technique; performing a verbal speech-based detection analysis by transcribing the extracted audio content into text, and checking whether a speech content of the extracted audio text is coherent, contextually relevant and/or aligns with an expected topic of the video digital content using a semantic analysis algorithm on the transcribed text; performing a voice tonality detection analysis by generating a spectrogram of the extracted audio content by transforming the extracted audio content from a time domain to a frequency domain, and identifying irregularities or artifacts characteristics of manipulated or synthesized voice using signal processing and deep learning algorithms on the generated spectrogram; performing a facial cue detection analysis by analyzing expression or mouth movements of the user by identifying and dynamically tracking at least one face landmark of the user using a computer vision algorithm on the extracted video component, and verifying whether the analyzed expression or mouth movements temporally and contextually align with speech phonetics; and determining that the obtained video digital content comprises deepfake content based on the performed verbal speech-based detection, voice tonality detection, and facial cue detection analysis.

In some embodiments, the method also comprises computing a first deepfake risk score based on a result of the checking step; computing a second deepfake risk score based on a result of said identifying step; computing a third deepfake risk score based on a result of said verifying step; computing a total deepfake risk score by aggregating the computed first, second, and third deepfake risk scores; and determining that the obtained video digital content comprises deepfake content when the computed total deepfake risk score is equal to or greater than a threshold.

In some embodiments, when the obtained video digital content has been determined to contain deepfake content the method further warns or alerts the user.

In some embodiments, the video digital content comprises a live or real time video.

In some embodiments, the checking step in the verbal speech-based detection analysis further comprises analyzing and detecting anomalies in rhythm, intonation, and/or language using one or more machine learning algorithms.

In some embodiments, a speech-tonality correlation analysis is performed. This can include determining a sentiment of the extracted audio content using a natural language processing algorithm on the transcribed text; detecting one or more emotions in the analyzed rhythm, intonation, and/or language using a machine learning algorithm; comparing the determined sentiment with the detected emotion(s); and computing a fourth deepfake risk score based on a result of the comparison.

In some embodiments, the voice tonality detection analysis further comprises detecting a suppressed or overemphasized frequency band by examining the power of different frequency bands of the generated spectrogram using one or more filtering and Fourier analysis techniques.

More specifically, in some embodiments, the method performs advanced spectral analysis to identify unusual patterns that may indicate audio manipulation, such as: unexpected frequency peaks (frequencies that deviate from typical human speech or are unnaturally amplified); suppressed frequency bands (missing frequency components, often a result of audio compression or deliberate manipulation); artifacts (visual or auditory signs of splicing, editing, or synthesis introduced during the manipulation process). The invention enhances the traditional spectral analysis by developing strategies integrating machine learning models trained on authentic speech spectrograms. These models are specifically tailored to detect subtle anomalies, such as those indicative of voice cloning, which may not be identified using conventional signal processing techniques. This advancement significantly boosts the system's ability to detect cloned or manipulated audio.

In some embodiments, the audio component is transformed from the time domain to the frequency domain using a Fourier analysis techniques, for instance, the Short-Time Fourier Transform (STFT).

In some embodiments, the at least one face landmark comprises the corners of the eyes, the tip of the nose, and/or the contour of the lips.

In some embodiments, the method focuses on critical landmarks around the mouth of the user to analyze movements corresponding to specific phonemes and vowels. The method can calculate distances and angles between key facial landmarks, capturing the shape and movement of the mouth during speech.

In some embodiments, the method performs landmark mapping to vowel sounds by analyzing mouth movements and positions for each vowel. This process can use the MediaPipe facial landmark map, which generates 468 3D landmarks. The analysis focuses specifically on those landmarks surrounding the mouth to detect shapes corresponding to distinct vowel sounds. For instance:

'A' as in 'bat': The system identifies a larger vertical gap between the upper and lower lips, indicative of an open mouth configuration.

'E' as in 'see': The mouth stretches horizontally, and the system measures the distance between the corners of the mouth to detect this shape.

'O' as in 'go': The lips form a rounded shape, prompting the system to analyze the roundness of the mouth opening.

'U' as in 'boot': The lips are rounded and protrude forward. This is detected by measuring both the forward movement and the rounding of the lips.

The mapping function, which correlates specific distances and angles between facial landmarks with corresponding vowel sounds, is calibrated using a diverse dataset of speakers. This calibration process accounts for variations in speech articulation caused by factors such as age, gender, and linguistic background, ensuring robust and accurate vowel detection across a wide range of users.

In some embodiments, the facial cue detection analysis further comprises detecting facial micro-expressions using optical flow analysis and at least one convolutional neural network, and cross-referencing the detected facial micro-expressions with speech and/or tone contents.

In some embodiments, the verifying step in the facial cue detection analysis comprises analyzing viseme sequences using a viseme-phoneme alignment algorithm, and ensuring they match expected facial movements for the spoken words.

In some embodiments, the extracted audio content is transcribed into text using a speech recognition model such as Whisper or DeepSpeech, among others.

In some embodiments, the semantic analysis algorithm comprises BERT, GPT, Mistral, Llama3 or RoBERTa.

In some embodiments, each one of the first, second, and third deepfake risk scores are assigned a given weight when calculating the total deepfake risk score. For instance, the given weight can be determined based on empirical considerations, and is adjustable according to specific requirements.

Other aspects of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, the present invention leverages sentiment analysis and facial recognition technologies to detect inconsistencies in the expression of emotions within videos or video calls. This invention examines the concordance between verbal speech, voice tonality and facial cues. Primarily intended to strengthen security measures, it excels at unmasking potential deception or fraud by providing an additional layer of defence in the battle against deepfakes. It distinguishes real human sentiment from sophisticatedly fabricated emotional representations, thus improving the accuracy of deepfake detection.

The present invention enhances conventional deepfake detection systems by integrating advanced analytical techniques that introduce an additional layer of scrutiny. Traditional methods typically analyze image artifacts, digital fingerprints, and inconsistencies in lighting and shadows. By incorporating thorough examinations of speech dynamics and facial expressions, the system becomes more robust and resilient, capable of thwarting even the most sophisticated deepfake attempts.

As deepfake generation technology evolves, it is imperative for detection systems to adopt a multidimensional approach. Leveraging every possible axis of analysis ensures the maintenance and improvement of their effectiveness. The contribution of the present invention lies in the development and integration of advanced models and algorithms across multiple modalities.

By fine-tuning existing language models for semantic analysis and creating custom emotion recognition models trained on diverse and multicultural datasets, the present invention introduces novel techniques that significantly enhance detection capabilities. The implementation of algorithms for viseme-phoneme alignment enables precise synchronization analysis between lip movements and speech, uncovering discrepancies indicative of manipulation.

Furthermore, adaptive risk evaluation mechanisms and dynamic threshold adjustments are incorporated to strengthen the system's robustness. These features ensure the system remains effective against constantly evolving manipulation techniques, reducing the likelihood of false negatives and improving overall detection reliability.

**BRIEF DESCRIPTION OF THE DRAWINGS**

The previous and other advantages and features will be more fully understood from the following detailed description of embodiments, with reference to the attached figures, which must be considered in an illustrative and non-limiting manner, in which:

Fig. 1 is a flow diagram showing an embodiment of the proposed method to detect deepfake in video digital content.

Fig. 2 is another flow diagram schematically showing the different analysis and steps that can be executed in the proposed method to detect deepfake in video digital content, according to another embodiment.

**DETAILED DESCRIPTION OF THE INVENTION AND OF PREFERRED EMBODIMENTS**

Media manipulation has reached unparalleled heights in today's digital age, with deepfakes at the forefront of this disturbing wave. Such deepfakes can bear grave implications, from spreading misinformation to security and personal privacy threats. In this light, the present invention provides a new technology to examine the concordance between three foundational elements of human communication: verbal speech, voice tonality, and facial cues. The underlying hypothesis is that while a deepfake may convincingly replicate one or two of these elements, achieving perfect harmony amongst all three is exceptionally challenging. The system's architecture may comprises three interconnected modules, each tailored to scrutinize one of these components.

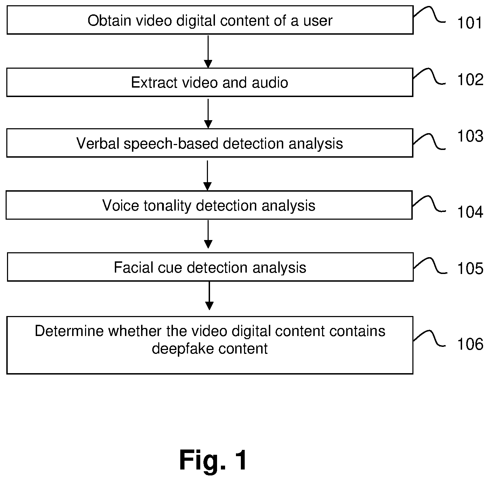

Fig. 1 shows a first embodiment of the proposed method for deepfake detection in video digital content. In this embodiment, the method first, at step 101, obtains a video digital content of a user, which can include a live video content or a recorded video content, and then, at step 102, extracts the audio component(s) from the video component(s).

At step 103, the method executes a verbal speech-based detection analysis, which particularly includes transcribing the extracted audio content into text and checking whether the speech content of the extracted audio text is coherent, contextually relevant and/or aligns with an expected topic of the video digital content. This can be done using a semantic analysis algorithm, such as AI models like classic BERT, GPT, Mistral, Llama3, RoBERTa, etc. on the transcribed text.

Since every voice has a unique spectral signature, represented by its frequency components, and that the analysis of these components can reveal inconsistencies or anomalies often found in manipulated or synthetic voices, at step 104, the method also executes a voice tonality detection analysis. This can be done by generating a spectrogram that visualizes the distribution of frequencies over time of the extracted audio content, and by identifying irregularities or artifacts characteristics of manipulated or synthesized voice using signal processing and deep learning algorithms on the generated spectrogram.

At step 105, the method additionally executes a facial cue detection analysis. Particularly, this is done by analyzing expression or mouth movements of the user, for example, by identifying and dynamically tracking at least one face landmark of the user (e.g. the corners of the eyes, the tip of the nose, contour of the lips, etc.) using a computer vision algorithm (e.g. Dlib, Mediapipe, OpenCV's, etc.) on the extracted video component, and by verifying whether the analyzed expression or mouth movements temporally and contextually align with speech phonetics.

Finally, at step 106, the method determines whether the obtained video digital content comprises deepfake content using the different analysis previously executed.

Additionally, in some embodiments, the method can further include calculating a deepfake risk score for each one of the detection analysis performed and computing a total deepfake risk score as the sum of the different calculated risk scores. In this case, the method will determine that the obtained video digital content comprises deepfake content when the computed total deepfake risk score is equal to or greater than a given threshold.

In some embodiments, the semantic analysis utilizes advanced natural language processing (NLP) models to assess the coherence of speech within the audio. Models such as BERT, GPT, or RoBERTa can be pre-trained on large linguistic datasets, enabling them to evaluate the context and structure of sentences. A SemanticAnalysis function can load these models and compute a coherence score for the given audio. If the scores are below a certain threshold, the video digital content can be flagged as incoherent.

A contextual relevance function can ensure that the speech content of a video aligns with a specified topic. In some embodiments, this process begins by extracting the speech or audio transcript from the video using advanced speech recognition models. In some embodiments, the present invention utilizes a customized version of models like Whisper or DeepSpeech, which have been specifically retrained on domain-specific datasets to enhance accuracy in transcribing speech from various sources. Once the transcript is obtained, the system analyzes the content to determine its alignment with the expected topic. This is achieved through semantic analysis using state-of-the-art language models such as GPT-4, RoBERTa, or LLMs, which in some embodiments are fine-tuned for topic classification and relevance detection. The present invention can also integrate a dynamic topic modeling algorithm that adapts to contextual shifts within the conversation, providing a more nuanced assessment of relevance. If a mismatch between the speech content and the expected topic is detected, it indicates potential manipulation or misalignment, and the video digital content can be flagged accordingly.

In some embodiments, an anomaly detection involving examining the audio for deviations from genuine speech patterns is also performed. In some embodiments, the present invention employs a One-Class Support Vector Machine (SVM) model that is trained exclusively on features extracted from authentic speech recordings. This training focuses on capturing the nuances of genuine speech, including rhythm, intonation, and pronunciation patterns. The process begins by scaling the extracted audio features to ensure they are normalized for analysis. The One-Class SVM model then analyzes these features to detect any anomalies. If anomalies are detected, the system can flag the video digital content as potentially tampered.

In some embodiments, an spectral analysis function performs an in-depth examination of the audio's frequency components to detect unusual patterns indicative of manipulation. Initially, the audio signal is transformed from the time domain to the frequency domain using a Fast Fourier Transform (FFT) or the like. This transformation results in a spectrogram that visualizes the distribution of frequencies over time. The present invention can employ advanced signal processing techniques to analyze the spectrogram including an anomaly detection algorithm that identifies irregularities in frequency magnitudes and patterns, such as unexpected peaks or suppressed frequency bands. This algorithm is particularly sensitive to artifacts introduced by common audio manipulation tools and deepfake generation methods. If the algorithm detects values exceeding predefined thresholds, it can flag the audio for spectral anomalies.

In some embodiments, a speech-tonality correlation function assesses the alignment between the sentiment expressed in the spoken content and the emotional tone conveyed through the voice. The transcribed speech text undergoes sentiment analysis using natural language processing models like BERT or GPT-4, which can be fined-tuned with emotion-labeled datasets to improve sentiment detection accuracy in spoken language. This analysis identifies the underlying sentiment-positive, negative, or neutral-expressed in the content. Then, voice tonality features such as pitch, timbre, and intonation are extracted using signal processing techniques. A pre-trained emotion recognition model, enhanced with a dataset of emotional speech samples, analyzes these features to determine the emotional state conveyed by the speaker's voice. The present invention can also include a cross-modal emotion recognition framework that improves the correlation accuracy between audio features and emotional labels. Finally, the invention can compare the detected sentiment from the text with the recognized emotion from the voice tonality. A mismatch between the two-such as a cheerful tone conveying 'happiness' while the text expresses negative sentiments-may indicate an artificial overlay of voice or content manipulation. If a discrepancy is found, the system can flag the video digital content for speech-tonality mismatch.

A facial mapping function analyzes facial movements and expressions to detect inconsistencies with the spoken phonetics. The present invention can utilize advanced facial landmark detection models like MediaPipe Face Mesh, which can be extended to improve detection accuracy under varying lighting conditions and video qualities. The system can track key facial points, focusing on mouth movements corresponding to speech. A synchronization algorithm that aligns detected mouth movements with the phonetic timing derived from the audio can also be employed. This particularly involves analyzing the viseme sequences-the visual equivalent of phonemes-and ensuring they match the expected facial movements for the spoken words. The invention provides a real-time alignment of viseme-phoneme pairs to improve the detection of lip-sync inconsistencies. Any identified misalignment indicates potential manipulation, prompting the video digital content to be flagged for further examination.

In some embodiments, a microexpression analysis is also performed. This particularly involves detecting brief, involuntary facial expressions that reveal genuine emotions, often occurring within fractions of a second. The system can employ high-frame-rate video analysis to capture these subtle cues, and uses enhanced models based on dlib and OpenCV libraries, integrated with a custom-trained convolutional neural network (CNN) designed to recognize microexpressions with higher accuracy. The model is trained on an extensive dataset of microexpressions, including those that are culturally specific, which is a significant technical contribution to the field. By cross-referencing detected microexpressions with the context and tone of the speech, the system identifies any incongruence that may indicate emotional suppression or manipulation. Such incongruences can be flagged as potential indicators of tampering.

In some embodiments, the present invention additionally aggregates risk factors from each analysis function to evaluate the overall integrity of the video digital content. Each function contributes a weighted risk score based on the severity and reliability of the detected anomalies. The weights can be determined through empirical studies and can be adjusted according to specific use-case requirements. The cumulative risk can be compared against a threshold to classify the video content as comprising deepfake content, i.e. "Manipulated", or not comprising deepfake content, i.e. "Genuine or Authentic".

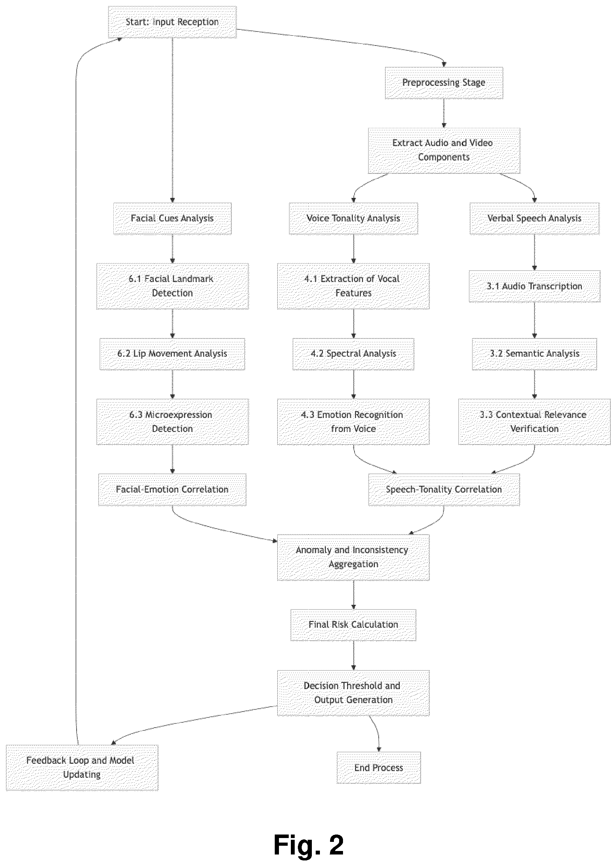

With reference now to Fig. 2, a more comprehensive and detailed embodiment of the proposed method is illustrated. The pipeline integrates the techniques in natural language processing, audio signal processing, and computer vision to detect inconsistencies in emotional expressions within videos or video calls, thereby enhancing the detection of deepfake and manipulated video digital content.

The process begins (Start: Input Reception) with the reception of a video input, which could be a pre-recorded video or a live video call feed. Then a preprocessing stage is executed which extracts the audio and video components. The video is decomposed into its audio and video components for separate analysis. High-fidelity extraction methods that preserve the quality and integrity of both audio and visual data, ensuring accurate subsequent analyses, can be used to perform such task.

The execution of the verbal speech detection analysis of this embodiment comprises:

3.1. Audio Transcription: The audio component is transcribed into text using advanced speech recognition models. For example, models like Whisper, DeepSpeech, or Wav2Vec 2.0 can be employed. In some embodiments, these models can be further enhanced by fine-tuning them on domain-specific datasets that include various accents, dialects, and speaking styles to improve accuracy in diverse scenarios.

3.2. Semantic Analysis: The transcribed text undergoes semantic analysis to assess context, coherence, and relevance to the expected topic. Existing Models such as GPT-4, BERT, RoBERTa, and XLNet can be utilized.

3.3. Contextual Relevance Verification: The system verifies if the speech content aligns with the expected subject matter. A context-aware topic modeling algorithm that dynamically adjusts to the conversation's context using techniques like Latent Dirichlet Allocation (LDA) enhanced with contextual embeddings is developed.

The execution of the voice tonality analysis comprises:

4.1. Extraction of Vocal Features: The system extracts vocal features such as pitch, tone, tempo, and timbre from the audio signal. OpenSMILE toolkit and Librosa library for feature extraction can be used.

4.2. Spectral Analysis: Analysis of the audio's frequency spectrum to detect anomalies. An advanced spectral anomaly detection algorithm that identifies irregularities in harmonic structures and formant frequencies characteristic of natural human speech is implemented.

4.3. Emotion Recognition from Voice: The emotional tone conveyed through voice is analyzed using pre-trained models like DeepSpectrum, Microsoft's Emotion Recognition API, or Google's Cloud Speech-to-Text. Thus, a customized emotion recognition model trained on a diverse emotional speech dataset, including cross-cultural expressions of emotions, is created.

After such analysis, a speech-tonality correlation is performed, in which the system compares the sentiment derived from the transcribed text with the emotions detected in the voice tonality. To that end, a multimodal sentiment-emotion alignment module uses machine learning to assess the congruence between textual sentiment and vocal emotion.

The execution of the facial cues analysis in this case involves:

6.1. Facial Landmark Detection: Detection of facial landmarks to analyze expressions and mouth movements. MediaPipe Face Mesh, Dlib, or OpenFace can be used for performing such task.

6.2. Lip Movement Analysis: Lip movements are examined to verify synchronization with spoken phonetics. A viseme-phoneme alignment model that maps visual mouth shapes (visemes) to speech sounds (phonemes) is created. Thus, an Automated Lip-Sync Analyzer that detects discrepancies between lip movements and audio, indicating potential dubbing or manipulation, is created.

6.3. Microexpression Detection: Brief, involuntary facial expressions that reveal genuine emotions are also detected. Thus, a Temporal Facial Action Coding System (FACS) that captures microexpressions in real-time, enhancing the ability to detect concealed emotions, is created.

The system then compares the emotions detected from facial expressions with those derived from voice tonality and speech content (Facial-Emotion Correlation).

Next, the method aggregates all the detected anomalies and inconsistencies from previous steps, and calculates a total risk score to determine the likelihood of manipulation. In some embodiments, the aggregation can use a weighted risk assessment algorithm that assigns dynamic weights to different types of anomalies based on their significance and reliability.

The method then compares the total risk score against a threshold to classify the video digital content (Decision Threshold and Output Generation). In this embodiment, the method additionally incorporates a feedback mechanism where user inputs and new data are used to retrain and improve the models, establishing a continuous learning framework that keeps the system up-to-date with evolving manipulation techniques. Federated learning can be used to update models without compromising data privacy.

Finally, the assessment process is completed, and results can be communicated to the user. Insights and recommendations, such as suggesting verification through alternative channels if manipulation is suspected, can be provided.

In another embodiment, in this case not illustrated, the system receives a video digital content for comprehensive analysis to detect potential manipulations or emotional inconsistencies. A variable 'risk' is firstly initialized at 0% and serves as an accumulator for scores derived from the various evaluations performed. The method then proceeds with the execution of the different analysis, which in this case include:

- Verbal Speech Analysis:

  - Audio Extraction and Transcription: The audio component of the video digital content is extracted using advanced signal processing techniques, followed by transcription using speech recognition models such as Whisper or Deep-

Speech. These models are fine-tuned for accuracy across diverse accents and linguistic contexts.
  - Content Coherence Evaluation: The transcribed text undergoes semantic and logical analysis using pre-trained language models like GPT-4, BERT, or RoBERTa. Any significant incoherence identified increases the risk by 20%.
  - Contextual Relevance Verification: The speech content is compared to the expected topic using thematic classification and semantic similarity analysis, leveraging models like Llama 3 or Mistral. Misalignments with the expected context add another 20% to the risk.
  - Anomaly Detection in Speech Patterns: Machine learning models trained on genuine speech patterns can be employed to detect deviations in rhythm, intonation, and language use. Deviations indicative of manipulation or artificial voice generation increase the risk by 20%.

- Voice Tonality Analysis:

  - Spectrogram Visualization and Evaluation: The system generates a spectrogram to visualize frequency and energy distributions over time. Signal processing and deep learning methods detect spectral irregularities or artifacts characteristic of synthetic or manipulated voices, adding 10% to the risk.
  - Frequency Band Analysis: Power across frequency bands can be also examined using filters and Fourier analysis to identify suppressed or overemphasized ranges. Detection of anomalies increases the risk by 10%.

- Speech-Tonality Correlation:

  - Sentiment Analysis of Spoken Content: The transcribed text can undergo sentiment analysis using natural language processing models like BERT or GPT-4, potentially refined to capture specific emotional nuances. The predominant sentiment-positive, negative, or neutral-is determined.
  - Emotion Recognition in Voice Tonality: The audio's prosodic features, such as intonation, rhythm, and intensity, can be analyzed using machine learning models trained for emotion recognition from vocal signals. This step identifies the emotions conveyed through voice tonality.
  - Comparison Between Sentiment and Emotion: The sentiment derived from the verbal content can be compared with the emotions detected in the voice tonality. A significant incongruence between the two may indicate emotional dissonance or manipulation. If they do not match, the risk increases by 10%.

- Facial Cue Detection:

  - Facial Mapping and Tracking: Detailed facial mapping can be performed using computer vision techniques and models like OpenFace or MediaPipe. Key facial points can be detected and tracked to analyze movements and expressions. The system verifies whether facial movements temporally and contextually align with the phonetics of the speech. Misalignment results in a 5% increase in risk.
  - Microexpression Analysis: Microexpressions can be likewise analyzed using specialized models capable of recognizing subtle facial expressions that may reveal hidden or suppressed emotions. Techniques such as optical flow analysis and convolutional neural networks detect microexpressions incongruent with the verbal content or voice tonality. Detection of such incongruities adds 5% to the risk.

Once all analyses are completed, the system calculates the total accumulated risk. If the total equals or exceeds a given threshold (e.g. 60%), the video is classified as "Manipulated." Otherwise, it is deemed "Genuine". The overall risk value can be computed using the formula:

$$\text{Total Risk} = \sum_{i=s}^{e} W_i \cdot R_i$$

The variables "R" represent the presence or absence of an anomaly. Their value is binary: if no anomaly is detected, R = 0%, and if an anomaly is present, R takes a predefined maximum value (e.g., 5%, 10%, or 20%). These values are not combined; they simply indicate how much base risk is added by each type of anomaly when detected. In this way, R functions as a switch: it either contributes no risk or the established maximum.

On the other hand, the variables "W" are factors that adjust the relative importance of each anomaly in the total risk calculation. While R determines the base percentage (0% or a fixed maximum value), W acts as a multiplier. If W = 1, the risk is added as is, but if the influence of an anomaly needs to be decreased or increased, W is modified. This makes the logic flexible: the Rs define the detection and its maximum contribution, while the Ws allow for recalibrating how much that detection actually weighs in the final outcome.

The weights W and risks R can be defined as follows:

- Ws: Weight for incoherent speech content.

- Wc: Weight non-matching contextual relevance.
- Wa: Weight anomalous speech patterns.
- Wp: Weight unusual spectrogram pattern.
- Wf: Weight frequency band anomalies.
- Wt: Weight mismatched speech-tonality.
- Wm: Weight facial movement misalignment.
- We: Weight incongruent microexpressions.
- Rs: Risk for incoherent speech content (either 0% or 20%).
- Rc: Risk for non-matching contextual relevance (either 0% or 20%).
- Ra: Risk for anomalous speech patterns (either 0% or 20%).
- Rp: Risk for unusual spectrogram patterns (either 0% or 10%).
- Rf: Risk for frequency band anomalies (either 0% or 10%).
- Rt: Risk for mismatched speech-tonality (either 0% or 10%).
- Rm: Risk for facial movement misalignment (either 0% or 5%).
- Re: Risk for incongruent microexpressions (either 0% or 5%).

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

**Claims**

1. A method for deepfake detection in video digital content, the method comprising performing by one or more processors the following steps:

   obtaining a video digital content of a user;
   extracting an audio component and a video component from the video digital content using a signal processing technique;
   performing a verbal speech-based detection analysis by:

   transcribing the extracted audio content into text; and
   checking whether a speech content of the extracted audio text is coherent, contextually relevant and/or aligns with an expected topic of the video digital content using a semantic analysis algorithm on the transcribed text;

   performing a voice tonality detection analysis by:

   generating a spectrogram of the extracted audio content by transforming the extracted audio content from a time domain to a frequency domain; and
   identifying irregularities or artifacts characteristics of manipulated or synthesized voice using signal processing and deep learning algorithms on the generated spectrogram;

   performing a facial cue detection analysis by:

   analyzing expression or mouth movements of the user by identifying and dynamically tracking at least one face landmark of the user using a computer vision algorithm on the extracted video component; and
   verifying whether the analyzed expression or mouth movements temporally and contextually align with speech phonetics; and

   determining that the obtained video digital content comprises deepfake content based on the performed verbal speech-based detection, voice tonality detection, and facial cue detection analysis.

2. The method of claim 1, further comprising:

   computing a first deepfake risk score based on a result of the checking step;
   computing a second deepfake risk score based on a result of said identifying step;
   computing a third deepfake risk score based on a result of said verifying step;
   computing a total deepfake risk score by aggregating the computed first, second, and third deepfake risk scores; and
   determining that the obtained video digital content comprises deepfake content when the computed total deepfake risk score is equal to or greater than a threshold.

3. The method of any one of the previous claims, wherein the checking step in the verbal speech-based detection analysis further comprises analyzing and detecting anomalies in rhythm, intonation, and/or language using a machine learning algorithm.

4. The method of claim 3, further comprising performing a speech-tonality correlation analysis by:

   determining a sentiment of the extracted audio content using a natural language processing algorithm on the transcribed text;
   detecting one or more emotions in the analyzed rhythm, intonation, and/or language using a machine learning algorithm;
   comparing the determined sentiment with the detected emotion(s); and
   computing a fourth deepfake risk score based on a result of the comparison.

5. The method of any one of the previous claims, wherein the voice tonality detection analysis further comprises detecting a suppressed or overemphasized frequency band by examining power of different frequency bands of the generated spectrogram using one or more filtering and Fourier analysis techniques.

6. The method of any one of the previous claims, wherein the at least one face landmark comprises the corners of the eyes, the tip of the nose, and/or the contour of the lips.

7. The method of any one of the previous claims, wherein the facial cue detection analysis further comprises detecting facial micro-expressions using optical flow analysis and at least one convolutional neural network, and cross-referencing the detected facial micro-expressions with speech and/or tone contents.

8. The method of any one of the previous claims, wherein the verifying step in the facial cue detection analysis comprises analyzing viseme sequences using a viseme-phoneme alignment algorithm, and ensuring they match expected facial movements for the spoken words.

9. The method of any one of the previous claims, wherein the extracted audio content is transcribed into text using a speech recognition model including Whisper or DeepSpeech.

10. The method of any one of the previous claims, wherein the semantic analysis algorithm comprises: BERT, GPT, Mistral, Llama3 or RoBERTa.

11. The method of claim 2, wherein each one of the first, second, and third deepfake risk scores are assigned a given weight when calculating the total deepfake risk score.

12. The method of any one of the previous claims, further comprising warning or alerting the user when the obtained video digital content has been determined to contain deepfake content.

13. The method of any one of the previous claims, wherein the video digital content comprises a live or real time video.

14. A system for deepfake detection in video digital content, comprising a memory and one or more processors, which are configured to:

> obtain a video digital content of a user;
> extract an audio component and a video component from the video digital content using a signal processing technique;
> perform a verbal speech-based detection analysis by:
>
>> transcribing the extracted audio content into text; and
>> checking whether a speech content, coherence and/or relevance of the extracted audio text aligns with an expected topic of the video digital content using a semantic analysis algorithm on the transcribed text;
>
> perform a voice tonality detection analysis by:
>
>> generating a spectrogram of the extracted audio content by transforming the extracted audio content from a time domain to a frequency domain; and
>> identifying irregularities or artifacts characteristics of manipulated or synthesized voice using signal processing and deep learning algorithms on the generated spectrogram;
>
> perform a facial cue detection analysis by:
>
>> analyzing expression or mouth movements of the user by identifying and dynamically tracking at least one face landmark of the user using a computer vision algorithm on the extracted video component; and
>> verifying whether the analyzed expression or mouth movements temporally and contextually align with speech phonetics;
>
> determine that the obtained video digital content comprises deepfake content based on the performed verbal speech-based detection, voice tonality detection, and facial cue detection analysis.

15. A non-transitory computer readable medium including code instructions that when executed in a computer system implement the steps of the method of any one of the claim 1 to 13.

Obtain video digital content of a user — 101

Extract video and audio — 102

Verbal speech-based detection analysis — 103

Voice tonality detection analysis — 104

Facial cue detection analysis — 105

Determine whether the video digital content contains deepfake content — 106

# Fig. 1

Fig. 2

Europäisches
Patentamt

European
Patent Office

Office européen
des brevets

# EUROPEAN SEARCH REPORT

**Application Number**

EP 24 38 3471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEWIS JOHN K ET AL: "Deepfake Video Detection Based on Spatial, Spectral, and Temporal Inconsistencies Using Multimodal Deep Learning", 2020 IEEE APPLIED IMAGERY PATTERN RECOGNITION WORKSHOP (AIPR), IEEE, 13 October 2020 (2020-10-13), pages 1-9, XP033913559, DOI: 10.1109/AIPR50011.2020.9425167 [retrieved on 2021-05-06] * figures 1, 2 * * lines 6-12 of section "C. Sub-Networks"; page 5, right-hand column * * page 5, right-hand column, line 27 - line 34 * * page 2, left-hand column, line 6 - line 8 * * abstract * * page 4, left-hand column, line 25 - line 35 * * lines 7-9 of Section "Sub-Networks"; page 5, right-hand column * * Section "DeepSpeech2"; page 5, right-hand column, line 10 - line 26 * ----- | 1-15 | INV. G10L15/26 G10L25/30 G10L25/51 G10L25/57 G10L25/63 ADD. G10L15/25 G10L25/18 |
| A | US 2021/385212 A1 (TAGRA HIMANSHU [IN] ET AL) 9 December 2021 (2021-12-09) * figures 5, 6, 8 * * paragraph [0037] - paragraph [0038] * * paragraph [0053] * * paragraph [0033] - paragraph [0034] * ----- | 1-15 | |

**TECHNICAL FIELDS SEARCHED (IPC)**

G10L
G06V
G06F

The present search report has been drawn up for all claims

| Place of search | Date of completion of the search | Examiner |
|---|---|---|
| The Hague | 1 April 2025 | Stan, Guy-Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                   

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 38 3471

This annex lists the patent family members relating to the patent documents cited in  the above-mentioned European search report.
The members are as contained in the European Patent Office EDP file on
The European Patent Office is in no way liable for these particulars which are merely given for the purpose of information.

01-04-2025

| Patent document cited in search report | Publication date | Patent family member(s) | Publication date |
|---|---|---|---|
| US 2021385212    A1 | 09-12-2021 | NONE | |

EPO FORM P0459

For more details about this annex : see Official Journal of the European Patent Office, No. 12/82